# EUROPEAN PATENT APPLICATION

(11) **EP 2 889 821 A1**
(43) Date of publication of application: **01.07.2015**
(21) Application number: 14200155.1
(22) Date of filing: 23.12.2014
(51) Int. Cl.: G06Q 10/08

(54) **Whole-course visualization system and method for logistics articles**

(30) Priority: 30.12.2013 CN 201310741706
(71) Applicant: Nuctech Company Limited, Haidian District, Beijing 100084 (CN); Tsinghua University, Haidian District, Beijing 100084 (CN)
(72) Inventor: Chen, Zhiqiang, 100084 Beijing (CN); Zhao, Ziran, 100084 Beijing (CN); Wang, Wenjing, 100084 Beijing (CN); Cui, Jin, 100084 Beijing (CN); Lin, Dong, 100084 Beijing (CN); Ji, Dongxu, 100084 Beijing (CN); Hu, Bin, 100084 Beijing (CN); Li, Na, 100084 Beijing (CN)
(74) Representative: Delumeau, François Guy

(57) **Abstract**

The disclosure provides a whole-course visualization system for logistics articles, including: an information collecting subsystem, including a plurality of information collecting units, which are respectively deployed at different sites along a logistics route, and configured to collect ID information of a parcel and acquire image information of an article in the parcel; and an information center processing subsystem, configured to store and manage data of the ID information and image information collected by and sent from the information collecting units, and send the stored data to the information collecting units according to requests from information collecting units; wherein the information collecting units compare data sent from the information center processing subsystem with the ID information and image information collected by information collecting units, and determine whether the collected ID information and image information are consistent with the data sent from information center processing subsystem.

## Description

### TECHNICAL FIELD

The present invention relates to a whole-course visualization system for acquiring information of articles in a parcel using a noninvasive imaging device during a whole logistics course.

### BACKGROUND

In recent years, express logistics plays a more and more important role in people's life. However, there are many problems existing in express logistics industry, for example, frequent complaints from clients, and never-stopping disputes. Articles in a parcel may be damaged or stealthily substituted during the transportation. Since express logistics route is long, the responsible party cannot be determined in case of occurrence of problems. In addition, several incidents of parcel explosion or parcel combustion occurred; every year, the postal sector seizes contraband such as firearms and ammunition, and narcotic drugs. Although the government stipulates that parcels shall be opened and inspected during pick-up of the parcels, in practice, such stipulation cannot be implemented strictly. Frequently occurred incidents regarding express logistics safety and security stir public concern on the safety and security of the express parcels.

From the perspective of the entire logistics industry, in the traditional logistics business mode, participants involved in various links are independent of each other, and information is isolated. Therefore, in the course of high speed development in the industry, problems of low efficiency, loss of the credit system, and complexity in supervision are present. Because of the prominent effects on solving these problems, the logistics whole-course visualization information platform is an inevitable choice in the modern logistics industry.

In the current express logistics industry, a few logistics companies inspect the parcels in the transfer station via X-ray devices. The inspection devices are independent of each other. Therefore, it may only be determined through inspection whether the parcels contain hazardous articles and contraband. In the present development stage of the industry, the express logistics companies pursue huge parcel pick-up quantities, and have no time to the matter whether the parcels cause safety and security risks. From another perspective, the current logistics whole-course visualization service platform mainly employs such technical means as the radio frequency identification (RFID) technologies, the mobile communication technology, the global positioning system, and the geographic information system, and collects, releases and integrates bill information and waybill tracking information of articles. This is favorable to integration of various logistics resources, and improvement of the logistics efficiency; and facilitates establishment of a uniform credit system and meanwhile improves the government management efficiency. However, in the current solution, basic status information or internal status information of articles is not involved, and thus hazardous articles or contraband in the parcels fails to be found. In cases where the articles are damaged or stealthily substituted, the specific link of the problem fails to be defined.

### SUMMARY

The present invention is proposed for solving problems existing in a current logistics information platform. An objective of the present invention is to provide a whole-course visualization system for logistics articles. The system is capable of acquiring information of articles in parcels, and detecting whether the articles in the parcels are damaged or stealthily substituted, without opening packages through information comparison during a whole logistics course. In addition, hazardous articles or contraband in the parcels may be detected, which is convenient for monitoring parcels in the whole-course, and ensuring safety.

To achieve the above objective, the present invention provides a whole-course visualization system for logistics articles, including:

an information collecting subsystem, including a plurality of information collecting units, wherein the plurality of information collecting units are respectively deployed at different sites along a logistics route, and configured to collect ID information of a parcel and acquire image information of an article in the parcel; and an information center processing subsystem, configured to store and manage data of the ID information and the image information collected by and sent from the information collecting units, and send the stored data to the information collecting units according to requests from the information collecting units; wherein the information collecting units compare data sent from the information center processing subsystem with the ID information and the image information collected by the information collecting units, and determine whether the collected ID information and image information are consistent with the data sent from the information center processing subsystem.In a whole-course visualization system for logistics articles according to an embodiment of the present invention:
the information collecting units comprise: a parcel identifying device, configured to acquire ID information of a parcel; an image collecting device, configured to acquire image information of an article in the parcel; a collection controlling system, configured to control the parcel identifying device and the image collecting device; and a transmitting device, configured to send and receive data; and the information center processing subsystem includes: an information center transmitting device, configured to send and receive data to and from the information collecting units; an information center managing device, configured to manage and process all information; an information displaying device, configured to display information; and a storage device, configured to store information collected by the information collecting units.In a whole-course visualization system for logistics articles according to an embodiment of the present invention the information collecting units and the information center processing subsystem send and receive data therebetween over a wireless communication network or a wired communication network.

In a whole-course visualization system for logistics articles according to an embodiment of the present invention, the image collecting device is an inspecting device operating in a nondestructive and noninvasive imaging manner.

In a whole-course visualization system for logistics articles according to an embodiment of the present invention, the inspecting device is an imaging device using X ray, millimeter wave, or terahertz wave.

In a whole-course visualization system for logistics articles according to an embodiment of the present invention, the collection controlling system comprises a collection controlling device, an information displaying device, a transmitting device, a storage device, and a service acquiring device; the collection controlling device is configured to bind the ID information of the parcel to the image information of the article in the parcel, and add collection attribute information; the information displaying device is configured to display the collected images and related information, and has functions of processing and comparing images; the transmitting device is configured to upload or download information; the storage device is configured to temporarily store locally desired information and images; the service acquiring device is connected to a transportation service system, and configured to obtain basic information of a parcel via a unique ID of the parcel, the basic information being displayed over the information displaying device; and the collection controlling device is configured to control the information displaying device, the transmitting device, the storage device, and the service acquiring device.In addition, the present invention provides a whole-course visualization method for logistics articles, wherein the method includes the following steps:

(a) picking up a parcel, and collecting parcel information at a first inspection site along a transportation route; (b) sending the parcel information to an information center processing subsystem, and storing, by the information center processing subsystem, the parcel information; (c) collecting the parcel information of the parcel at a next inspection site along the transportation route, and requesting the information center processing subsystem to send history inspection information of the parcel along the transportation route; (d) sending, by the information center processing subsystem, the history inspection information of the parcel along the transportation route to the inspection site; (e) comparing the collected parcel information at the inspection site with the history inspection information, and determining whether the collected parcel information is consistent with the history inspection information; (f) sending the collected parcel information to the information center processing subsystem, and storing, by the information center processing subsystem, the collected parcel information; and (g) repeatedly performing steps (c) to (f) at subsequent inspection sites until the parcel is transported to a destination. In a whole-course visualization method for logistics articles according to an embodiment of the present invention, the parcel information includes ID information of a parcel, and image information of an article in the parcel; and the history inspection information includes ID information of a parcel, and image information of an article in the parcel.

In a whole-course visualization method for logistics articles according to an embodiment of the present invention, the collected parcel information and the information center processing subsystem send and receive data therebetween over a wireless communication network or a wired communication network.

In a whole-course visualization method for logistics articles according to an embodiment of the present invention, the image information of the article in the parcel is acquired in a nondestructive and noninvasive imaging manner.

In a whole-course visualization method for logistics articles according to an embodiment of the present invention, the nondestructive and noninvasive imaging manner uses X ray, millimeter wave, or terahertz wave.

In an embodiment of the present invention, the whole-course visualization method for logistics articles further comprises:

binding the ID information of the parcel to the image information of the article in the parcel, and adding collection attribute information.

The beneficial effect is that information of articles in parcels may be added in the whole-course logistics visualization system, thereby improving the whole-course visualization service capabilities. During transfer of the logistics, by comparing image information of the articles in the parcels, it may be as early as possible to determine whether the articles therein are damaged or stealthily substituted. In combination with article image information in the packages of the parcels, the hazardous articles or contraband in the packages may be detected. Further, relevant events may be traced using the system, to detect the cause to the problem.

### BRIEF DESCRIPTION OF THE DRAWINGS

FIG. 1 is a structural diagram of a whole-course visualization system for article information according to the present invention;

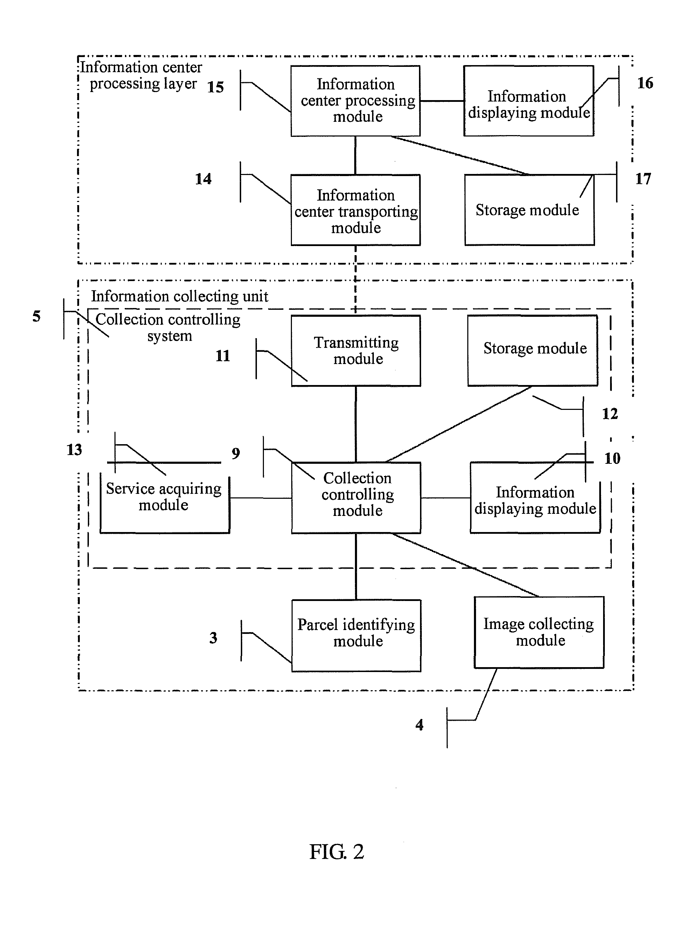

FIG. 2 is a block diagram of all the parts in the whole-course visualization system according to the present invention;
FIG. 3 is a flowchart of sending information in the whole-course visualization system according to the present invention; and
FIG. 4 is a flowchart of receiving information in the whole-course visualization system according to the present invention.

### DETAILED DESCRIPTION

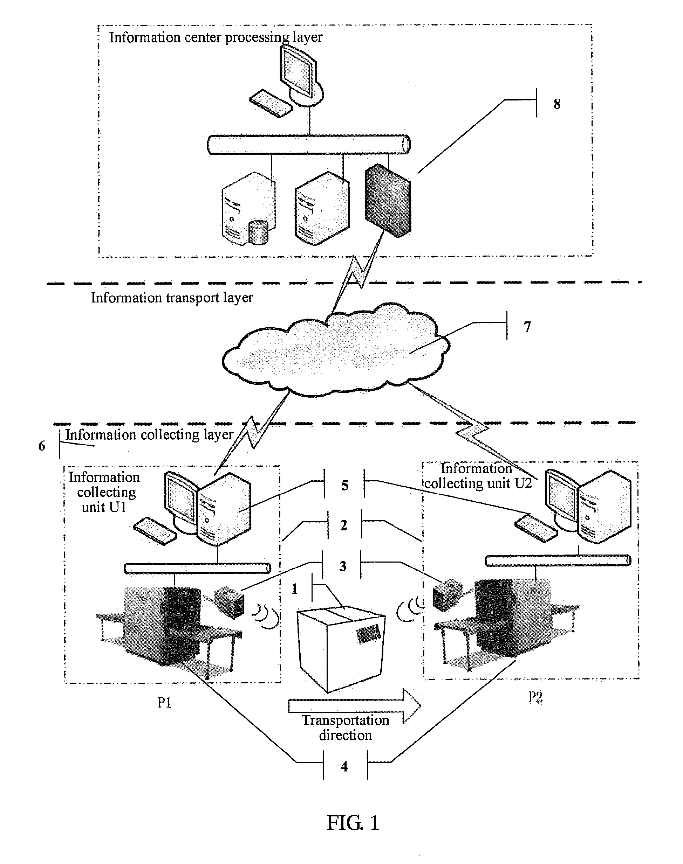

Hereinafter, the present invention is described in detail with reference to accompanying drawings and exemplary embodiments. An embodiment of the present invention provides a whole-course visualization system for logistics articles. FIG. 1 is a structural diagram of a whole-course visualization system for article information according to the present invention. As shown in FIG. 1, the whole-course visualization system for article information according to the present invention includes an information collecting subsystem 6 and an information center processing subsystem 8. In addition, the information collecting subsystem 6 and the information center processing subsystem 8 send and receive data over an information transport layer 7.

### Information collecting subsystem

An information collecting subsystem includes a plurality of information collecting units, wherein at least two information collecting units 2 are deployed along a whole-course logistics route. For example, to accommodate high requirements on parcel transportation speed in the express logistics industry, at start site P1 and destination site P2 along the transportation route, the information collecting units may be deployed on a necessary dedicated pick-up transportation means, at a pick-up collection site, or on a logistics conveyor belt at a transfer station. The information collecting unit includes a parcel identifying device 3, an image collecting device 4, and a collection controlling system 5. Both the parcel identifying device 3 and the image collecting device 4 are connected to the collection controlling system 5, and the collection controlling system 5 is configured to control the parcel identifying device 3 and the image collecting device 4. A unique ID of a parcel 1, for example, the tracking number, is acquired via the parcel identifying device 3. The image collecting device 4 is an inspecting device operating in a nondestructive and noninvasive imaging manner. For example, image information of the article in the parcel is acquired by using electromagnetic wave imaging devices, such as, X ray, millimeter wave, or terahertz wave. The collection controlling system 5 consists of a collection controlling device 9, an information displaying device 10, a transmitting device 11, a storage device 12, and a service acquiring device 13. The collection controlling device 9 is configured to control the information displaying device 10, the transmitting device 11, the storage device 12, and the service acquiring device 13. The collection controlling device 9 is further configured to bind the ID information of the parcel to the image information of the article in the parcel, and add collection attribute information, for example, collection time, device number, site number, and the like. The information displaying device 10 is capable of displaying the collected image and related information, has functions of processing and comparing images, and is capable of performing such tasks as related information retrieval and the like. The transmitting device 11 is configured to upload or download information over an information transport layer. The storage device 12 is configured to temporarily store locally desired information and images. The service acquiring device 13 is connected to a transportation service system, and configured to obtain basic information of a parcel via a unique ID of the parcel, wherein the basic information is displayed over the information displaying device 10.

In addition, problems of the articles in the parcels are detected by checking the collection information in the following manners:
(1) Related scanning images of a parcel during the transportation may be accessed via the unique ID of the parcel, and uniform comparison and check are conducted. Herein, the method of related images may be employed to help to detect a difference therebetween, and thus it is determined whether the article in the parcel is stealthily substituted.
(2) Express bill information may be acquired via the unique ID of a parcel, for example, article name, and it is determined based on the express bill information whether the article in the parcel is damaged or stealthily substituted.
(3) In addition, upon access to the scanning images of an article, with a universal image processing method, it is determined that a pre-warned article is contraband or a hazardous article. This manner is the same as viewing the scanning images in the common security inspection field.

Considering that the collected images need to be subjected to the subsequent comparison, in practice, it is required that each time a parcel image is sampled, the parcel 1 passes through the image collecting device 4 in the same orientation.

### Information transport layer

The information transport layer 7 is configured to transmit information collected by the collecting units in the information collecting subsystem to the information center processing subsystem over a wireless communication network or a wired communication network, and send the parcel's history images and information which need to be compared in the information collecting subsystem to the corresponding information collecting unit.

### Information center processing subsystem

The information center processing subsystem 8 is configured to store and manage data of information collected by the information collecting subsystem 6. The information center processing subsystem 8 includes: an information center transmitting device 14, an information center processing device 15, an information displaying device 16, and a storage device 17. The information center transmitting device 14 is configured to send and receive information to and from the information collecting units. The information center processing device 15 is configured to manage all information. A storage device 17 is configured to store all collected information. The information displaying device 16 is configured to display information. For example, data analysis, storage, and management are performed through querying and accessing related inspection information of the parcel.

In addition, the information center processing subsystem 8 is comprised by computer network devices such as, a router, a firewall, a computer server, and a display client that are connected to a public network. The information center processing subsystem 8 is configured to perform tasks of displaying and analyzing, storing, and managing the collected information. The center processing layer software mainly implements the following functions:
(1) parcel information and image display function;
(2) parcel scanning image processing function;
(3) parcel scanning image comparison function; and
(4) history parcel information and image query function.

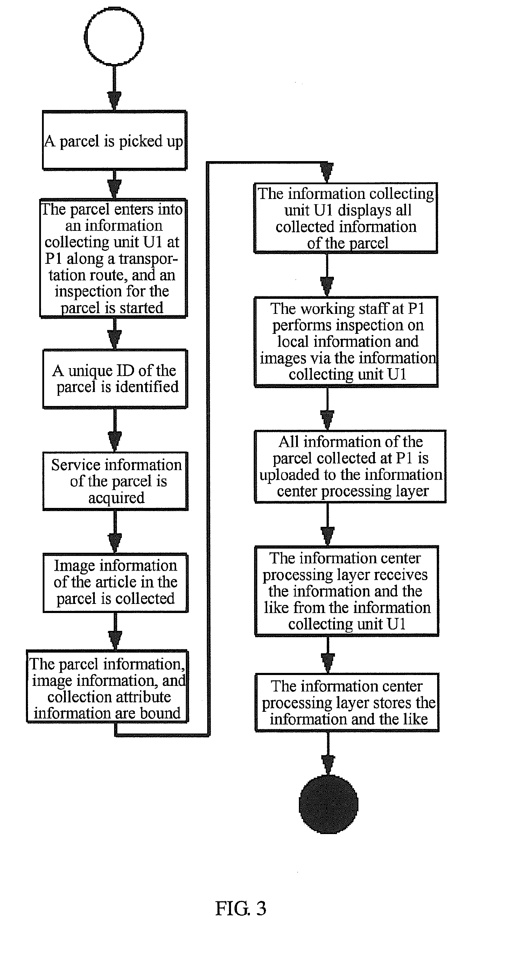

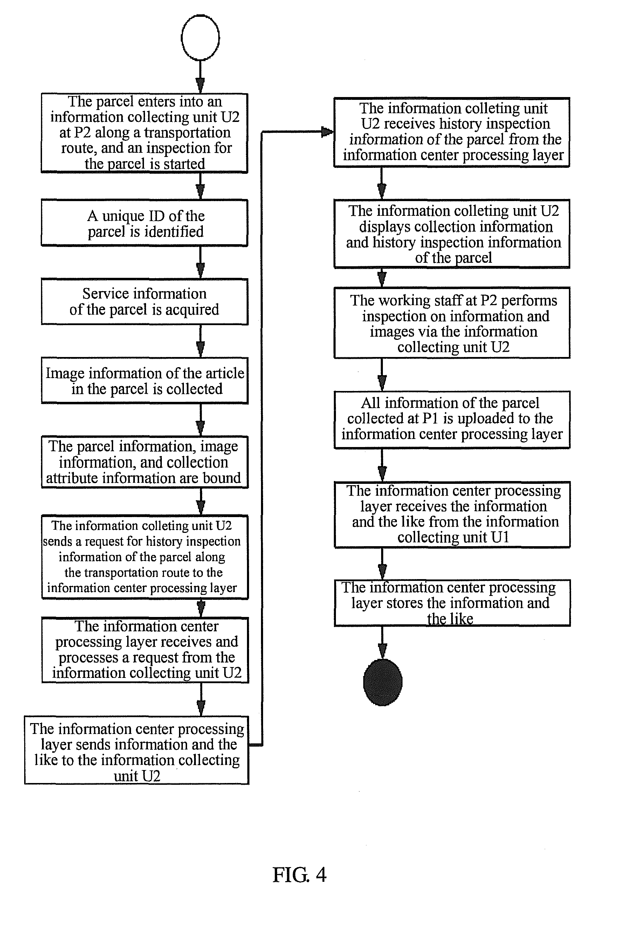

The implementation process in the system according to the present invention is mainly divided into two parts. FIG. 3 is a flowchart of sending information in the system according to the present invention, and FIG. 4 is a flowchart of receiving information in the system according to the present invention. The process of sending information by the system is as follows:
Step 101: A parcel is picked up.
Step 102: The parcel enters an information collecting unit U1 at P1 along a transportation route, and an inspection for the parcel is started.
Step 103: A unique ID of the parcel is identified.
Step 104: Service information of the parcel is acquired.
Step 105: Image information of the article in the parcel is collected.
Step 106: The parcel information, image information, and collection attribute information are bound.
Step 107: All information of the parcel collected at P1 is uploaded to the information center processing subsystem.
Step 108: The information center processing subsystem receives information and the like from the information collecting unit U1.
Step 109: The information center processing subsystem stores information and the like.

In addition, the process of receiving information by the system is as follows:
Step 110: The parcel enters an information collecting unit U2 at P2 along a transportation route, and an inspection for the parcel is started.
Step 111: A unique ID of the parcel is identified.
Step 112: Service information of the parcel is acquired.
Step 113: Image information of the article in the parcel is collected.
Step 114: The parcel information, image information, and collection attribute information are bound.
Step 115: The information colleting unit U2 sends, to the information center processing subsystem, a request for history inspection information of the parcel along the transportation route.
Step 116: The information center processing subsystem receives the request from the information colleting unit U2, and processes the request.
Step 117: The information center processing subsystem sends information and the like to the information collecting unit U2.
Step 118: The information colleting unit U2 receives history inspection information of the parcel and the like from the information center processing subsystem.
Step 119: The information colleting unit U2 displays current collection information and history inspection information of the parcel.
Step 120: The information colleting unit U2 performs inspection according to the current collection information and the history inspection information of the parcel.
Step 121: All information of the parcel collected at P2 is uploaded to the information center processing subsystem.
Step 122: The information center processing subsystem receives information and the like from the information collecting unit U2.
Step 123: The information center processing subsystem stores information and the like sent from the information collecting unit U2.

Under circumstance where the system is not installed:
Problems of stealthy substitution and damage of a parcel may only be confirmed after the parcel is sent to the consignee and opened by the consignee. If the consignee opens the parcel to examine the article in the parcel in the presence of the express transportation company or carrier, the loss is shouldered by the express logistics party, but the actual cause to the problem fails to be found by the expression logistics party. As a result, a relevant responsible person cannot be determined and thus reoccurrence of such problem cannot be stopped. Especially, when a plurality of express transportation companies cooperate for transportation, it is much more difficult to determine a responsible party.

In addition, if the article in a parcel fails to be checked or inspected during pick-up of the parcel, contraband or a hazardous article contained in the parcel cannot be detected. Even if the parcel is opened for check and inspection during pick-up of the parcel, parcel pick-up personnel have limited professional knowledge, and thus fail to ensure that the article in the parcel is definitely a regulation compliant article.

With the system installed, typical warning samples according to the present invention are as follows:

### (1) An article in a parcel is stealthily substituted.

A mobile phone in a parcel is transported from site A to site B sequentially via three parcel security inspection sites P1, P2, and P3, wherein P1 is a pick-up security inspection site. At P1, upon access to scanning images and related express bill information of the article, it is determined that image information of the article in the parcel is consistent with the article name signed on the express bill, that is, consistently mobile phone. At P2, upon access to the scanning images and the related express bill information of the article, it is determined that image information of the article in the parcel is consistent with the article name signed on the express bill, that is, consistently mobile phone. At P3, however, upon access to the scanning images and the related express bill information of the article, it is determined that image information of the article in the parcel is inconsistent with the article name signed on the express bill. Upon access to history inspection information of the parcel, it is found that the inspection information recorded at inspection sites P1 and P2 indicates that the article in the parcel is a mobile phone. Accordingly, it is inferred that the parcel is stealthily substituted during the transportation from P2 to P3.

### (2) An article in a parcel is damaged.

A precious porcelain vase in a parcel is transported from site A to site B sequentially via three parcel security inspection sites P1, P2, and P3, wherein P1 is a pick-up security inspection site. At P1, upon access to scanning images and related express bill information of the article, it is determined that the article in the parcel is intact. At P2, upon access to the scanning images and the related express bill information of the article, it is determined that the article in the parcel is intact. At P3, however, upon access to the scanning images and the related express bill information of the article, it is determined that the article in the parcel is damaged. Upon access to history inspection information of the parcel, it is found that the inspection information recorded at inspection sites P1 and P2 indicates that the article is intact. Accordingly, it is inferred that the parcel is damaged during the transportation from P2 to P3.

### (3) The article in a parcel is contraband or a hazardous article.

When contraband or a hazardous article is contained in a parcel, but a signed article name of the express bill indicates an ordinary article, such inconsistence may be found according to the scanning images and the related express bill information of the parcel when the parcel passes through parcel security inspection sites, specifically, when the parcel passes through the parcel pick-up security inspection site.

As described above, with the system installed, information of articles in parcels may be added in the whole-course logistics visualization system, thereby improving the whole-course visualization service capabilities. During transfer of the logistics, by comparing image information of the articles in the parcels, it may be as early as possible to determine whether the articles therein are damaged or stealthily substituted. In combination with article image information in the packages of the parcels, the hazardous articles or contraband in the packages may be detected as early as possible. Further, relevant events may be traced using the system, to detect the cause to the problem.

## Claims

1. A whole-course visualization system for logistics articles, comprising:
an information collecting subsystem (6), comprising a plurality of information collecting units (2), wherein the plurality of information collecting units are respectively deployed at different sites along a logistics route, and configured to collect ID information of a parcel and acquire image information of an article in the parcel; and
an information center processing subsystem (8), configured to store and manage data of the ID information and the image information collected by and sent from the information collecting units, and send the stored data to the information collecting units according to requests from the information collecting units;
wherein the information collecting units compare data sent from the information center processing subsystem with the ID information and the image information collected by the information collecting units, and determine whether the collected ID information and image information are consistent with the data sent from the information center processing subsystem.

2. The whole-course visualization system for logistics articles according to claim 1, **characterized in that**:
the information collecting units comprise: a parcel identifying device (3), configured to acquire ID information of a parcel; an image collecting device (4), configured to acquire image information of an article in the parcel; a collection controlling system (5), configured to control the parcel identifying device and the image collecting device; and a transmitting device, configured to send and receive data; and
the information center processing subsystem comprises: an information center transmitting device, configured to send and receive data to and from the information collecting units; an information center managing device, configured to manage and process all information; an information displaying device, configured to display information; and a storage device, configured to store information collected by the information collecting units.

3. The whole-course visualization system for logistics articles according to claim 1 or 2, **characterized in that**:
the information collecting units and the information center processing subsystem send and receive data therebetween over a wireless communication network or a wired communication network.

4. The whole-course visualization system for logistics articles according to claim 2 or 3, **characterized in that**:
the image collecting device (4) is an inspecting device operating in a nondestructive and noninvasive imaging manner.

5. The whole-course visualization system for logistics articles according to claim 4, **characterized in that**:
the inspecting device is an imaging device using X ray, millimeter wave, or terahertz wave.

6. The whole-course visualization system for logistics articles according to any one of claims 2 to 5, **characterized in that**:
the collection controlling system (5) comprises a collection controlling device (9), an information displaying device (10), a transmitting device (11), a storage device (12), and a service acquiring device (13);
the collection controlling device (9) is configured to bind the ID information of the parcel to the image information of the article in the parcel, and add collection attribute information;
the information displaying device (10) is configured to display the collected images and related information, and has functions of processing and comparing images;
the transmitting device (11) is configured to upload or download information;
the storage device (12) is configured to temporarily store locally desired information and images;
the service acquiring device (13) is connected to a transportation service system, and configured to obtain basic information of a parcel via a unique ID of the parcel, the basic information being displayed over the information displaying device; and
the collection controlling device is configured to control the information displaying device, the transmitting device, the storage device, and the service acquiring device.

7. A whole-course visualization method for logistics articles, comprising the following steps:
(a) picking up a parcel, and collecting parcel information at a first inspection site along a transportation route;
(b) sending the parcel information to an information center processing subsystem, and storing, by the information center processing subsystem, the parcel information;
(c) collecting the parcel information of the parcel at a next inspection site along the transportation route, and requesting the information center processing subsystem to send history inspection information of the parcel along the transportation route;
(d) sending, by the information center processing subsystem, the history inspection information of the parcel along the transportation route to the inspection site;
(e) comparing the collected parcel information at the inspection site with the history inspection information, and determining whether the collected parcel information is consistent with the history inspection information;
(f) sending the collected parcel information to the information center processing subsystem, and storing, by the information center processing subsystem, the collected parcel information; and
(g) repeatedly performing steps (c) to (f) at subsequent inspection sites until the parcel is transported to a destination.

8. The whole-course visualization method for logistics articles according to claim 7, **characterized in that**:
the parcel information comprises ID information of a parcel, and image information of an article in the parcel; and
the history inspection information comprises ID information of a parcel, and image information of an article in the parcel.

9. The whole-course visualization method for logistics articles according to claim 7 or 8, **characterized in that**:
the collected parcel information and the information center processing subsystem send and receive data therebetween over a wireless communication network or a wired communication network.

10. The whole-course visualization method for logistics articles according to claim 8 or 9, **characterized in that**:
the image information of the article in the parcel is acquired in a nondestructive and noninvasive imaging manner.

11. The whole-course visualization method for logistics articles according to claim 10, **characterized in that**:
the nondestructive and noninvasive imaging manner uses X ray, millimeter wave, or terahertz wave.

12. The whole-course visualization method for logistics articles according to any one of claims 7 to 11, further comprising:
binding the ID information of the parcel to the image information of the article in the parcel, and adding collection attribute information.
